# EUROPEAN PATENT SPECIFICATION

(11) **EP 1 290 566 B1**
(45) Date of publication and mention of the grant of the patent: **10.10.2007**
(21) Application number: 01922096.1
(22) Date of filing: 04.04.2001
(51) Int. Cl.: G06F 13/14

(54) **UNIVERSAL SERIAL BUS CONNECTING APPARATUS**
USB-VERBINDUNGSVORRICHTUNG
APPAREIL DE CONNEXION USB (BUS SERIEL UNIVERSEL)

(30) Priority: 15.04.2000 KR 2000019811
(43) Date of publication of application: 12.03.2003
(73) Proprietor: Opticis Co., Ltd., Sungnam-city 463-070, Kyungki-do (KR)
(72) Inventor: SHIN, Hyun-Kuk, Suwon-city, Kyungki-do 442-736 (KR); JUNG, Won-Seok, Suwon-city, Kyungki-do 442-736 (KR); KIM, Il, Yongin-city, Kyungki-do 449-840 (KR); LEE, Kum-Hee 506-603 Chung-Gu Apt., Sungnam-city, Kyungki-do 463-500 (KR)
(74) Representative: Walaski, Jan Filip
(86) International application number: PCT/KR2001/000573
(87) International publication number: WO 2001/080025

(56) References cited:
- JP-A- 11 338 587
- JP-A- 2000 183 920
- JP-A- 2000 187 537
- KR-A- 96 043 623
- KR-A- 99 048 668

## Description

### Technical Field

The present invention relates to a universal serial bus (USB) connecting apparatus for connecting a computer to peripheral devices, and more particularly, to a USB connecting apparatus for interconnecting first and second transceivers for USB.

### Background Art

USB is a Plug-and-Play (PnP) interface for connecting a computer to peripheral devices. The USB ports function as ports for keyboards and mice and parallel and serial ports. Thus, in a case where all ports of a computer are replaced with USB ports, there is no need for a user to distinguish a connector and a cable. Furthermore, using USB in peripheral devices allows a computer to perceive attachment/detachment to/from the USB port while the computer is running.

USB versions 1.0, 1.1, and 2.0 for a USB interface standard have been introduced. The USB versions 1.0, 1.1 and 2.0 relate to low-speed, full-speed, and ultrahigh-speed USB standards that support data transfer rates of 1.5, 12, and 480 megabytes per second (Mbps), respectively.

Typically, USB includes a power-voltage line of +5 V, a D+ data line, a D- data line, and a ground line. D+ and D- data signals carried on the D+ data line and the D- data line, respectively, are in a logic low state at single-end regions, while both signals are in opposite states in the remaining regions.

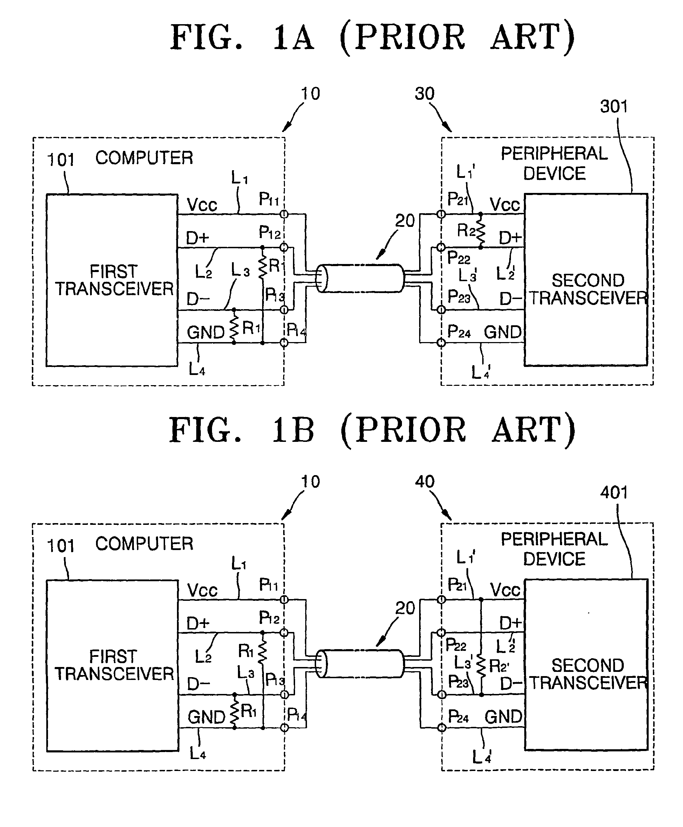

FIG. 1A shows a state in which a USB connection between a computer 10 and a full-speed peripheral device 30 has been made by a conventional electrical transmission cable 20. Here, the full-speed peripheral device 30 refers to a device that conforms to a full-speed USB standard. The computer 10 or the full-speed peripheral device 30 in FIG. 1 A may be replaced with a hub that serves as a connector between them.

Referring to FIG. 1A, a power-voltage (Vcc) line L₁ of +5 V, a D+ data line L₂, a D- data line L₃, and a ground (GND) line L₄ come from a first transceiver 101 for USB of the computer 10 and are connected to terminals P₁₁, P₁₂, P₁₃, and P₁₄ of a USB port, respectively. Here, pull-down resistors R₁ are connected between each of the data lines L₂ and L₃ and the ground line L₄.

Similarly, a power-voltage (Vcc) line L₁' of +5 V, a D+ data line L₂', a D- data line L₃', and a ground (GND) line L₄' come from a second transceiver 301 for USB of the full-speed peripheral device 30 and are connected to terminals P₂₁, P₂₂, P₂₃, and P₂₄ of a USB port, respectively. Here, a pull-up resistor R₂ is connected between the D+ data line L₂' and the power-voltage line L₁'.

The terminals P₁₁, P₁₂, P₁₃, and P₁₄ of the first transceiver 101 for USB are connected to the terminals P₂₁, P₂₂, P₂₃, and P₂₄ of the second transceiver 301 for USB, respectively, by the electrical cable 20. The voltage-power terminal P₁₁ of the first transceiver 101 is connected to the power-voltage terminal P₂₁ of the second transceiver 301 by an electrical line of the electrical cable 20. The D+ data terminal P₁₂ of the first transceiver 101 is connected to the D+ data terminal P₂₂ of the second transceiver 301 by an electrical line of the electrical cable 20. The D- data terminal P₁₃ of the first transceiver 101 is connected to the D- data terminal P₂₃ of the second transceiver 301 by an electrical line of the electrical cable 20. The ground terminal P₁₄ of the first transceiver 101 is connected to the ground terminal P₂₄ of the second transceiver 301 by an electrical line of the electrical cable 20.

FIG. 1 B shows a state in which a USB connection between the computer 10 and a low-speed peripheral device 40 has been made by the conventional electrical transmission cable 20. Here, the low-speed peripheral device 40 refers to a device that conforms to a low-speed USB standard. The computer 10 or the low-speed peripheral device 40 in FIG. 1 B may be replaced with a hub that serves as a relay-interface between them.

Referring to FIG. 1B, a power-voltage (Vcc) line L₁ of +5 V, a D+ data line L₂, a D- data line L₃, and a ground (GND) line L₄ come from the first transceiver 101 for USB of the computer 10 and are connected to terminals P₁₁, P₁₂, P₁₃, and P₁₄ of a USB port, respectively. Here, pull-down resistors R₁ are connected between each of the data lines L₂ and L₃ and the ground line L₄.

Similarly, a power-voltage (Vcc) line L₁' of +5 V, a D+ data line L₂', a D- data line L₃', and a ground (GND) line L₄' come from a second transceiver 401 for USB of the low-speed peripheral device 40 and are connected to terminals P₂₁, P₂₂, P₂₃, and P₂₄ of a USB port, respectively. Here, a pull-up resistor R₂' is connected between the D- data line L₃' and the power-voltage line L₁'.

The terminals P₁₁, P₁₂, P₁₃, and P₁₄ of the first transceiver 101 for USB are connected to the terminals P₂₁, P₂₂, P₂₃, and P₂₄ of the second transceiver 401 for USB, respectively, by the electrical cable 20. The voltage-power terminal P₁₁ of the first transceiver 101 is connected to the power-voltage terminal P₂₁ of the second transceiver 401 by an electrical line of the electrical cable 20. The D+ data terminal P₁₂ of the first transceiver 101 is connected to the D+ data terminal P₂₂ of the second transceiver 401 by an electrical line of the electrical cable 20. The D- data terminal P₁₃ of the first transceiver 101 is connected to the D- data terminal P₂₃ of the second transceiver 401 by an electrical line of the electrical cable 20. The ground terminal P₁₄ of the first transceiver 101 is connected to the ground terminal P₂₄ of the second transceiver 401 by an electrical line of the electrical cable 20.

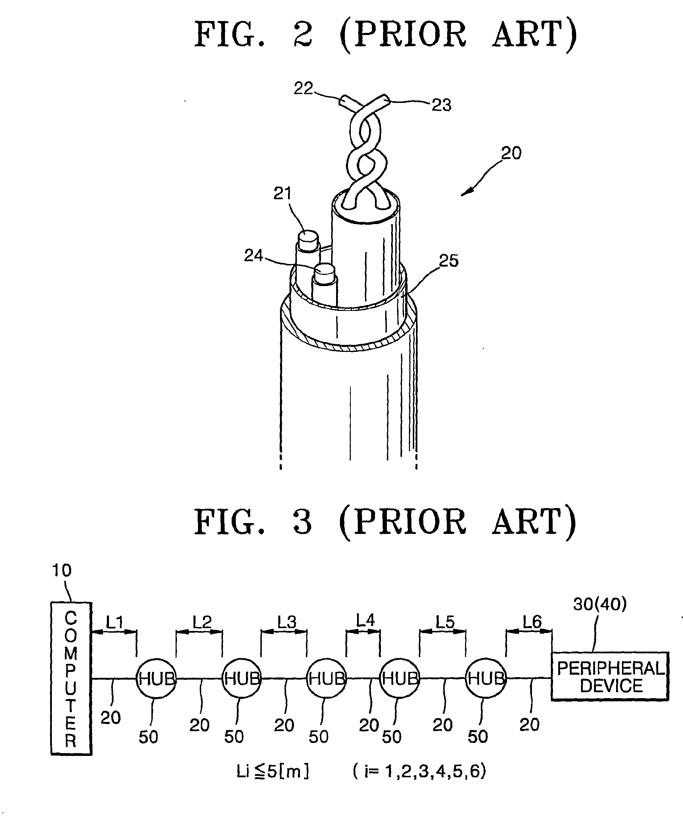

Referring to FIG. 2, the conventional electrical cable 20 for USB is composed of a power-voltage line 21 between the power-voltage terminals P₁₁ and P₁₂ of FIG. 1A or 1B, a D+ electrical line 22 between the D+ data terminals P₁₂ and P₂₂ of FIG. 1 A or 1 B, a D- electrical line 23 between the D- data terminals P₁₃ and P₂₃ of FIG. 1A or 1B, a ground line 24 between the ground terminals P₁₄ and P₂₄ of FIG. 1A or 1B, and a shield 25 for minimizing noise.

The USB connection method using the conventional electrical transmission cable 20 has several problems due to internal resistance of an electrical line itself. First, communication speed and maximum communication distance decrease. Second, a large amount of electrical noise is generated. Third, a difference in impedances between the D+ and D- electrical lines 22 and 23 is large.

Due to the above problems, the maximum communication distance is limited to 5 m or less. if two devices are directly connected by an electrical cable for USB. Thus, as shown in FIG. 3, a plurality of hubs 50 are used to increase an effective communication distance. However, in this case, since D+ and D- signals are delayed in the hubs 50 and the cables 20, a maximum number of the hubs 50 is restricted to six. Thus, if five hubs 50 are used, the maximum communication distance between the computer 10 and the peripheral device 30 or 40 is limited to 30 m or less.

### Disclosure of the Invention

To solve the above problems, it is an object of the present invention to provide a Universal Serial Bus (USB) connecting apparatus for interconnecting first and second transceivers for USB, which provides high communication speed and long maximum communication distance, eliminates electrical noise, and minimizes a difference in impedances between D+ and D- communication lines.

To accomplish the above object, the present invention provides a USB connecting apparatus for interconnecting first and second transceivers for USB. The USB connecting apparatus includes a D+ optical communication module, a D- optical communication module, and first and second electrical lines.

The D+ optical communication module, which is connected between D+ data terminals of the transceivers, converts a D+ electrical signal from the D+ data terminal of the first or second transceiver into a D+ optical signal and transmits the D+ optical signal, and restores the transmitted D+ optical signal to a D+ electrical signal and inputs the D+ electrical signal to the D+ data terminal of the second or first transceiver. The D- optical communication module, which is connected between D- data terminals of the transceivers, converts a D- electrical signal from the D- data terminal of the first or second transceiver into a D- optical signal and transmits the D- optical signal, and restores the transmitted D- optical signal to a D-electrical signal and inputs the D- electrical signal to the D- data terminal of the second or first transceiver. The first electrical line is connected between power-voltage terminals of the transceivers, while the second electrical line is connected between ground terminals of the transceivers.

According to the USB connecting apparatus, optical communications are accomplished by the D+ and D- optical communication modules. Thus, communication speed and effective communication distance increase, electrical noise is removed, and the difference in impedances between D+ and D- communication lines is minimized.

Preferably, the D+ optical communication module includes a first light emitting portion, a first optical fiber line, a second light receiving portion, a second light emitting portion, a second optical fiber line, and a first light emitting portion. The first light emitting portion converts a D+ electrical signal from the D+ data terminal of the first transceiver into a D+ optical signal. The first optical fiber line transmits the D+ optical signal from the first light emitting portion to the second transceiver. The second light receiving portion restores the D+ optical signal from the first optical fiber line to a D+ electrical signal and inputs the restored D+ electrical signal to the D+ data terminal of the second transceiver. The second light emitting portion converts a D+ electrical signal from the D+ data terminal of the second transceiver into a D+ optical signal. The second optical fiber line that transmits the D+ optical signal from the second light emitting portion to the first transceiver. The first light receiving portion that restores the D+ optical signal from the second optical fiber line to a D+ electrical signal and inputs the restored D+ electrical signal to the D+ terminal of the first transceiver.

Furthermore, it is preferable that, in the D+ optical communication module, light is transmitted through the first or second optical fiber line only when the D+ electrical signal from the D+ data terminal of the first or second transceiver is in a logic low state. Here, it is preferable that the D+ optical communication module further includes first and second control switching portions. The first control switching portion prevents the first light emitting portion from operating only when light is transmitted through the second optical fiber line. The second control switching portion prevents the second light emitting portion from operating only when light is transmitted through the first optical fiber line. Accordingly, the problem of received signals being retransmitted from D+ data terminals of the first and second transceivers can be overcome.

Meanwhile, it is preferable that the D- optical communication module includes a third light emitting portion, a third optical fiber line, a fourth light receiving portion, a fourth light emitting portion, a fourth optical fiber line, and a third light receiving portion. The third light emitting portion converts a D- electrical signal from the D- data terminal of the first transceiver into a D- optical signal. The third optical fiber line transmits the D- optical signal from the third light emitting portion to the second transceiver. The fourth light receiving portion restores the D- optical signal from the third optical fiber line to a D- electrical signal and inputs the restored D- electrical signal to the D- data terminal of the second transceiver. The fourth light emitting portion converts a D- electrical signal from the D- data terminal of the second transceiver into a D- optical signal. The fourth optical fiber line that transmits the D- optical signal from the fourth light emitting portion to the first transceiver. The third light receiving portion restores the D- optical signal from the fourth optical fiber line to a D- electrical signal and inputs the restored D- electrical signal to the D- terminal of the first transceiver.

It is preferable that, in the D- optical communication module, light is transmitted through the first or second optical fiber line only when the D-electrical signal from the D- data terminal of the first or second transceiver is in a logic high state. Here, it is preferable that the D+ optical communication module further includes third and fourth control switching portions. The third control switching portion prevents the third light emitting portion from operating only when light is transmitted through the fourth optical fiber line. The fourth control switching portion that prevents the third light emitting portion from operating only when light is transmitted through the third optical fiber line. Accordingly, the problem of the received signal being retransmitted from the D+ data terminals of the first and second transceivers can be overcome.

### Brief Description of the Drawings

FIG. 1A shows a state in which a USB connection between a computer and a full-speed peripheral device has been made by a conventional electrical transmission cable;
FIG. 1 B shows a state in which a USB connection between a computer and a low-speed peripheral device has been made by a conventional electrical transmission cable;
FIG. 2 is a perspective view showing the internal structure of a conventional electrical cable for USB;
FIG. 3 shows a state in which hubs are used to increase transmission distance of the conventional electrical cable for USB;
FIG. 4 shows a state in which a USB connection between a computer and a full-speed peripheral device has been made by a connecting apparatus according to the present invention;
FIG. 5 shows a state in which a USB connection between a computer and a low-speed peripheral device has been made by a connecting apparatus according to the present invention;
FIG. 6 is a circuit diagram showing the internal structure of the D+ optical communication module of the connecting apparatus of FIG. 4; and
FIG. 7 is a circuit diagram showing the internal structure of the D-optical communication module of the connecting apparatus of FIG. 4.

### Best mode for carrying out the Invention

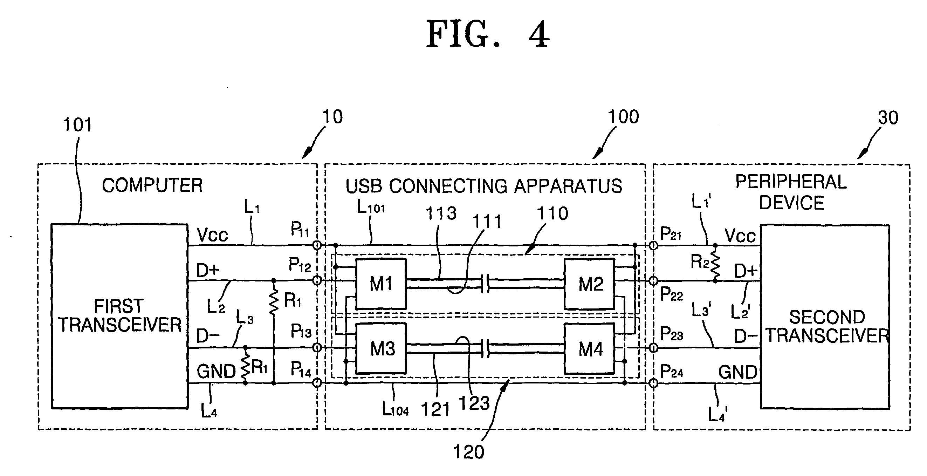

FIG. 4 shows a state in which a Universal Serial Bus (USB) connection between a computer 10 and a full-speed peripheral device 30 has been made by a connecting apparatus 100 according to the present invention. The same reference numeral in FIG. 4 as in FIG. 1 represent an element for performing the same function.

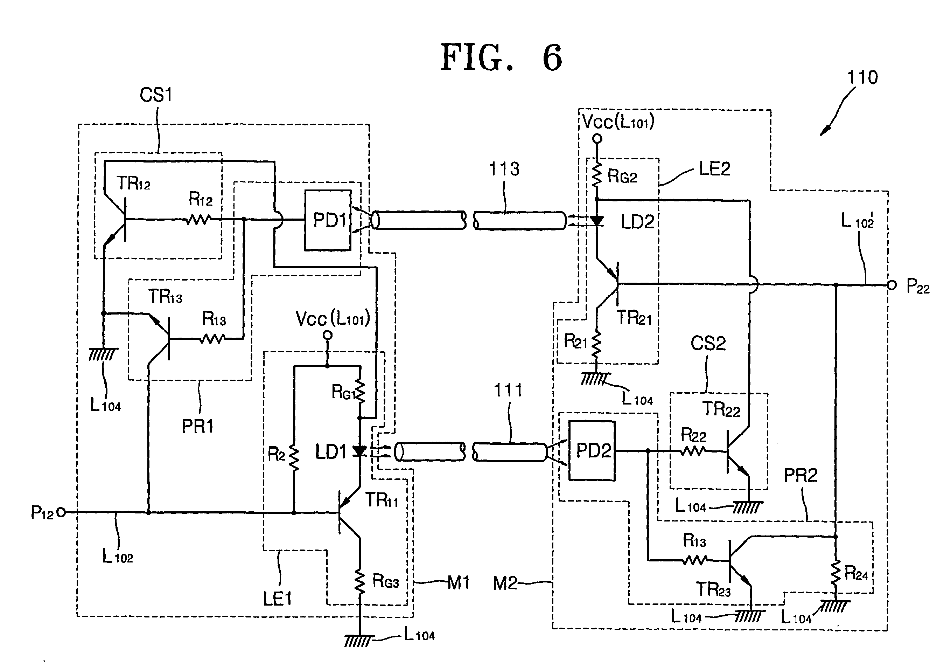

Referring to FIG. 4, the USB connecting apparatus 100 includes a D+optical communication module 110, a D-optical communication module 120, and first and second electrical lines L₁₀₁ and L₁₀₄. The D+ optical communication module 110, which is connected between D+ data terminals P₁₂ and P₂₂ of first and second transceivers 101 and 301, converts a D+ electrical signal from the D+ data terminal P₁₂ or P₂₂ of the first or second transceiver 101 or 301 into a D+ optical signal and transmits the D+ optical signal. Also, the D+ optical communication module 110 restores the transmitted D+ optical signal to a D+ electrical signal and inputs the restored D+ electrical signal to the D+ data terminal P₂₂ or P₁₂ of the second or first transceiver 301 or 101. The D+ optical communication module 110 includes a first module M1, a second module M2, a first optical fiber line 111, and a second optical fiber line 113. The operation of each component in the D+ optical communication module 110 will be described below with reference to FIG. 6.

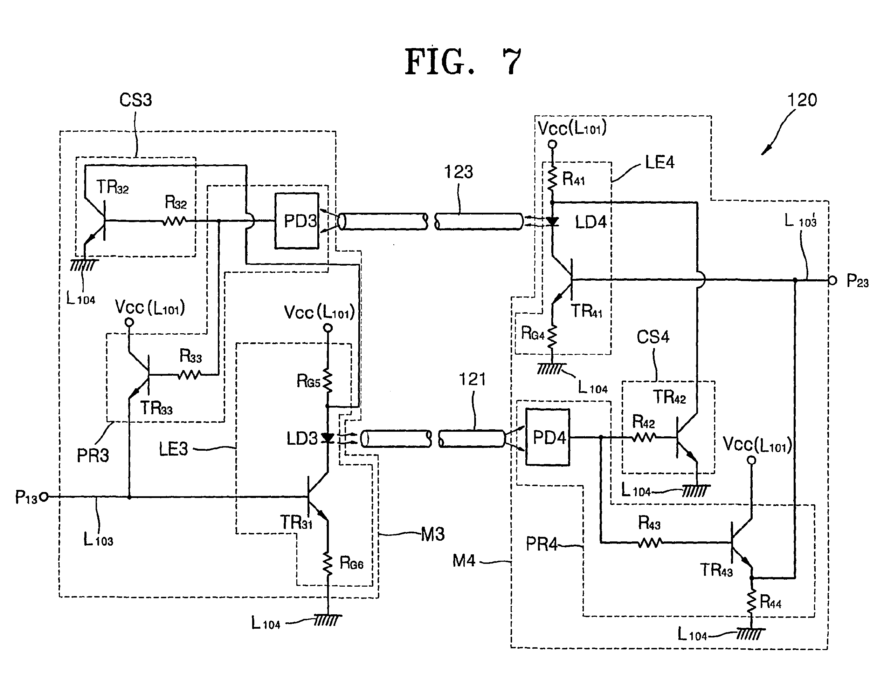

A D- optical communication module 120, which is connected between D- data terminals P₁₃ and P₂₃ of the first and second transceivers 101 and 301, converts a D- electrical signal from the D- data terminal P₁₃ or P₂₃ of the first or second transceiver 101 or 301 into a D- optical signal and transmits the D- optical signal. Also, the D- optical communication module 120 restores the transmitted D- optical signal to a D- electrical signal and inputs the restored D- electrical signal to the D- data terminal P₂₃ or P₁₃ of the second or first transceiver 301 or 101. The D- optical communication module 120 includes a third module M3, a fourth module M4, a third optical fiber line 121, and a fourth optical fiber line 123. The operation of each component in the D- optical communication module 120 will be described below with reference to FIG. 7.

The first electrical line L₁₀₁ is connected between power-voltage terminals P₁₁ and P₂₁ of the transceivers 101 and 301, while the second electrical line L₁₀₄ is connected between ground terminals P₁₄ and P₂₄ of the transceivers 101 and 301.

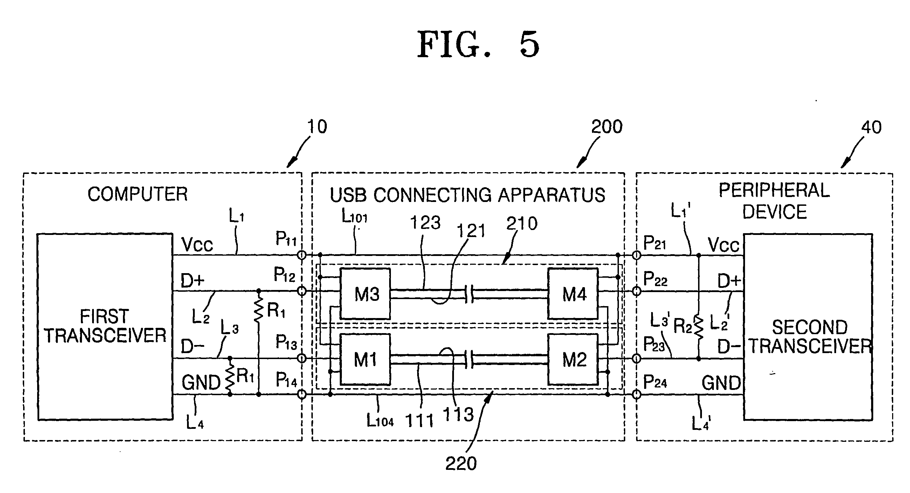

FIG. 5 shows a state in which a USB connection between the computer 10 and a low-speed peripheral device 40 has been made by a connecting apparatus 200 according to the present invention. The same reference numerals appearing in FIG. 5 as in FIG. 1 B represent an element that performs the same function.

Referring to FIG. 5, the USB connecting apparatus 200 includes a D+ optical communication module 210, a D- optical communication module 220, and first and second electrical lines L₁₀₁ and L₁₀₄. The D+ optical communication module 210, which is connected between D+ data terminals P₁₂ and P₂₂ of first and second transceivers 101 and 401, converts a D+ electrical signal from the D+ data terminal P₁₂ or P₂₂ of the first or second transceiver 101 or 401 into a D+ optical signal and transmits the D+ optical signal. Also, the D+ optical communication module 210 restores the transmitted D+ optical signal to a D+ electrical signal and inputs the restored D+ electrical signal to the D+ data terminal P₂₂ or P₁₂ of the second or first transceiver 401 or 101. The D+ optical communication module 210 includes a third module M3, a fourth module M4, a third optical fiber line 121, and a fourth optical fiber line 123. The operation of each component in the D+ optical communication module 210 is the same as that in the D-optical communication module 120, and thus a detailed explanation will be omitted.

A D- optical communication module 220, which is connected between D- data terminals P₁₃ and P₂₃ of the first and second transceivers 101 and 401, converts a D- electrical signal from the D- data terminal P₁₃ or P₂₃ of the first or second transceiver 101 or 401 into a D- optical signal and transmits the D- optical signal. Also, the D- optical communication module 120 restores the transmitted D- optical signal to a D- electrical signal and inputs the restored D- electrical signal to the D- data terminal P₂₃ or P₁₃ of the second or first transceiver 401 or 101. The D- optical communication module 220 includes a first module M1, a second module M2, a first optical fiber line 111, and a second optical fiber line 113. The operation of each component in the D- optical communication module 220 is the same as that in the D+ optical communication module 110, and thus a detailed explanation will be omitted.

The first electrical line L₁₀₁ is connected between power-voltage terminals P₁₁ and P₂₁ of the transceivers 101 and 401, while the second electrical line L₁₀₄ is connected between ground terminals P₁₄ and P₂₄ of the transceivers 101 and 401.

Referring to FIG. 6, the connecting apparatus 100 of FIG. 4 includes the first module M1, the second module M2, the first optical fiber line 111, and the second optical fiber line 113. The first module M1 includes a first light emitting portion LE1, a first light receiving portion PR1, and a first control switching portion CS1. The second module M2 includes a second light emitting portion LE2, a second light receiving portion PR2, and a second control switching portion CS2.

The first light emitting portion LE1 converts a D+ electrical signal from the D+ data terminal P₁₂ of the first transceiver (101 of FIG. 4) into a D+ optical signal. The first optical fiber line 111 transmits the D+ optical signal from the first light emitting portion LE1 to the second transceiver (301 of FIG. 4). The second light receiving portion PR2 restores the D+ optical signal from the first optical fiber line 111 to a D+ electrical signal and inputs the D+ electrical signal to the D+ data terminal P₂₂ of the second transceiver 301. The second light emitting portion LE2 converts a D+ electrical signal from the D+ data terminal P₂₂ of the second transceiver 301 into a D+ optical signal. The second optical fiber line 113 transmits the D+ optical signal from the second light emitting portion LE2 to the first transceiver 101. The first light receiving portion PR1 restores the D+ optical signal from the second optical fiber line 113 to a D+electrical signal and inputs the D+ electrical signal to the D+ data terminal P₁₂ of the first transceiver 101.

Here, light is transmitted through the first or second optical fiber line 111 or 113 only when a D+ electrical signal from the D+ data terminal P₁₂ or P₂₂ of the first or second transceiver 101 or 301 is in a logic low state. The first control switching portion CS1 prevents the first light emitting portion LE1 from operating only when light is transmitted through the second optical fiber line 113. Similarly, the second control switching portion CS2 prevents the second light emitting portion LE2 from operating only when light is transmitted through the first optical fiber line 111. Accordingly, retransmission of received signals from the D+ data terminals P₁₂ and P₂₂ of the first and second transceivers 101 and 301. can be prevented.

If a logic high signal is input to the D+ data terminal P₁₂ of the first transceiver 101, a PNP transistor TR₁₁ of the first light emitting portion LE1 is turned off to prevent current from flowing through a light emitting element LD1 such as a resonant cavity light emitting diode (RCLED). Thus, since light is not generated by the light emitting element LD1, a voltage is not generated by a light receiving element PD2 of the second light receiving portion PR2. Furthermore, an NPN transistor TR₂₃ of the second light receiving portion PR2 is turned off, so that current flows into a pull-down resistor R₂₄ of the second light receiving portion PR2 through the pull-up resistor (R₂ of FIG. 4) of the second transceiver 301. Accordingly, a logic high D+ signal is output through the D+ data terminal P₂₂ of the second transceiver 301. Here, an NPN transistor TR₂₂ of the second control switching portion CS2 is turned off, so that the second light emitting portion LE2 can operate normally.

Similarly, if a logic high signal is input to the D+ data terminal P₂₂ of the second transceiver 301, a PNP transistor TR₂₁ of the second light emitting portion LE2 is turned off to prevent current from flowing through a light emitting element LD2 such as a resonant cavity light emitting diode (RCLED). Thus, since light is not generated by the light emitting element LD2, a voltage is not generated by a light receiving element PD1 of the first light receiving portion PR1. Furthermore, an NPN transistor TR₁₃ of the first light receiving portion PR1 is turned off, so that current flows into the pull-down resistor (R₁ of FIG. 4) of the first transceiver 101 through the pull-up resistor R₂ of the first light emitting element LE1 and a terminal line L₁₀₂. Accordingly, a logic high D+ signal is output through the D+ data terminal P₁₂ of the first transceiver 101. Here, an NPN transistor TR₁₂ of the first control switching portion CS1 is turned off, so that the first light emitting portion LE1 can operate normally.

On the other hand, if a logic low signal is input to the D+ data terminal P₁₂ of the first transceiver 101, the PNP transistor TR₁₁ of the first light emitting portion LE1 is turned on, which causes current to flow from the power-voltage line L₁₀₁ into the ground line L₁₀₄ through a resistor R_{G1}, the light emitting element LD1, the PNP transistor TR₁₁ and a resistor R_{G3}. Thus, light is generated by the light emitting element LD1 of the first light emitting portion LE1, and the generated light is incident on the light receiving element PD2 of the second light receiving portion PR2 through the first optical fiber line 111. Then, since a voltage is generated by the light receiving element PD2 of the second light receiving portion PR2, current flows into the ground line L₁₀₄ through the resistor R₁₃. Furthermore, the NPN transistor TR₂₃ of the second light receiving portion PR2 is turned on, so that current flows into the ground line L₁₀₄ through the pull-up resistor (R₂ of FIG. 4), a terminal line L₁₀₂', and the NPN transistor TR₂₃ of the second light receiving portion PR2. Thus, a logic low D+ signal is output through the D+ data terminal P₂₂ of the second transceiver 301. In this case, since the NPN transistor TR₂₂ of the second control switching portion CS2 is turned on, the second light emitting portion LE2 cannot operate. In this way, retransmission of the received logic low signal from the D+ data terminal P₂₂ of the second transceiver 301 can be prevented.

In the same manner, if a logic low signal is input to the D+ data terminal P₂₂ of the second transceiver 301, the PNP transistor TR₂₁ of the second light emitting portion LE2 is turned on, which causes current to flow from the power-voltage line L₁₀₁ into the ground line L₁₀₄ through a resistor R_{G2}, the light emitting element LD2, the PNP transistor TR₂₁ and a resistor R₂₁. Thus, light is generated by the light emitting element LD2 of the second light emitting portion LE1, and the generated light is incident on the light receiving element PD1 of the first light receiving portion PR1 through the second optical fiber line 113. Since a voltage is generated by the light receiving element PD1 of the first light receiving portion PR1, the NPN transistor TR₁₃ is turned on, so that the potential of the D+ data terminal P₁₂ of the first transceiver 101 approaches a ground potential. That is, a logic low D+ signal is output through the D+ data terminal P₁₂ of the first transceiver 101. In this case, since the NPN transistor TR₁₂ of the first control switching portion CS1 is turned on, the first light emitting portion LE1 cannot operate. Accordingly, retransmission of the received logic low signal from the D+ data terminal P₁₂ of the first transceiver 101 can be prevented.

Referring to FIG. 7, the D- optical communication module 120 of the connecting apparatus 100 of FIG. 2 includes the first module M3, the fourth module M4, the third optical fiber line 121, and the fourth optical fiber line 123. The third module M3 includes a third light emitting portion LE3, a third light receiving portion PR3, and a third control switching portion CS3. The fourth module M4 includes a fourth light emitting portion LE4, a fourth light receiving portion PR4, and a fourth control switching portion CS4.

The third light emitting portion LE3 converts a D- electrical signal from the D- data terminal P₁₃ of the first transceiver (101 of FIG. 4) into a D+ optical signal. The third optical fiber line 121 transmits the D- optical signal from the third light emitting portion LE3 to the second transceiver (301 of FIG. 4). The fourth light receiving portion PR4 restores the D+ optical signal from the third optical fiber line 121 to a D- electrical signal and inputs the D- electrical signal to the D- data terminal P₂₃ of the second transceiver 301. The fourth light emitting portion LE4 converts a D- electrical signal from the D- data terminal P₂₃ of the second transceiver 301 into a D- optical signal. The fourth optical fiber line 123 transmits the D- optical signal from the fourth light emitting portion LE4 to the first transceiver 101. The third light receiving portion PR3 restores the D- optical signal from the fourth optical fiber line 123 to a D- electrical signal and inputs the D- electrical signal to the D- data terminal P₁₃ of the first transceiver 101.

Here, light is transmitted through the third or fourth optical fiber line 121 or 123 only when a D- electrical signal from the D- data terminal P₁₃ or P₂₃ of the first or second transceiver 101 or 301 is in a logic high state. The third control switching portion CS3 prevents the third light emitting portion LE3 from operating only when light is transmitted through the fourth optical fiber line 123. Similarly, the fourth control switching portion CS4 prevents the fourth light emitting portion LE4 from operating only when light is transmitted through the third optical fiber line 121. Accordingly, retransmission of received signals from the D+ data terminals P₁₂ and P₂₂ of the first and second transceivers 101 and 301 can be prevented.

If a logic high signal is input to the D- data terminal P₁₃ of the first transceiver 101, a NPN transistor TR₃₁ of the third light emitting portion LE3 is turned on, which causes current to flow from the power-voltage line L₁₀₁ into the ground line L₁₀₄ through a resistor R_{G5.} a light emitting element LD3, the NPN transistor TR₃₁ and a resistor R_{G6}. Thus, light is generated by the light emitting element LD3 of the third light emitting portion LE3, such as RCLED, and the generated light is incident on a light receiving element PD4 of the fourth light receiving portion PR4 through the third optical fiber line 121. Then, since a voltage is generated by the light receiving element PD4 of the fourth light receiving portion PR4, current flows into the ground line L₁₀₄ through a resistor R₄₃, an NPN transistor TR₄₃, and a pull-down resistor R₄₄. Furthermore, the NPN transistor TR₄₃ of the fourth light receiving portion PR4 is turned on, so that current flows into the ground line L₁₀₄ through the NPN transistor TR₄₃, and the pull-down resistor R₄₄. Thus, since the potential of the D- data terminal P₂₃ of the second transceiver 301 approaches a power supply voltage Vcc, a logic high D- signal is output. In this case, since an NPN transistor TR₄₂ of the fourth control switching portion CS4 is turned on, the fourth light emitting portion LE4 cannot operate. In this way, retransmission of the received logic high signal from the D- data terminal P₂₃ of the second transceiver 301 can be prevented.

In the same manner, if a logic high signal is input to the D- data terminal P₂₃ of the second transceiver 301, an NPN transistor TR₄₁ of the fourth light emitting portion LE4 is turned on, which causes current to flow from the power-voltage line L₁₀₁ into the ground line L₁₀₄ through a resistor R₄₁, a light emitting element LD4, an NPN transistor TR₄₁ and a resistor R_{G4}. Thus, light is generated by the light emitting element LD4 of the fourth light emitting portion LE4, and the generated light is incident on a light receiving element PD3 of the third light receiving portion PR3 through the fourth optical fiber line 123. Since a voltage is generated by the light receiving element PD3 of the third light receiving portion PR3, current flows into the pull-down resistor (R₁ of FIG. 4) of the first transceiver 101 through a resistor R₃₃, an NPN transistor TR₃₃, a terminal line L₁₀₃, and the D- data terminal P₁₃. Furthermore, the NPN transistor TR₃₃ of the third light receiving portion PR3 is turned on, so that current flows from the power-voltage line L₁₀₁ into pull-down resistor (R₁ of FIG. 4) of the first transceiver 101 through the NPN transistor TR₃₃, the terminal line L_{103'} and the D- data terminal P₁₃. Thus, since the potential of the D- data terminal P₁₃ of the first transceiver 101 approaches a power supply voltage Vcc, a logic high D-signal is output. In this case, since an NPN transistor TR₃₂ of the third control switching portion CS3 is turned on, the third light emitting portion LE3 cannot operate. Accordingly, retransmission of the received logic high signal from the D- data terminal P₁₃ of the first transceiver 101 can be prevented.

On the other hand, if a logic low signal is input to the D- data terminal P₁₃ of the first transceiver 101, the NPN transistor TR₃₁ of the third light emitting portion LE3 is turned off, so as to prevent current from flowing through the light emitting element LD3. Thus, since light is not generated by the light emitting element LD3, a voltage is not generated by the light receiving element PD4 of the fourth light receiving portion PR4. Furthermore, the NPN transistor TR₄₃ of the fourth light receiving portion PR4 is turned off to bring the D- data terminal P₂₃ of the second transceiver 301 into a floating state. That is, a logic low D- signal is output through the D- data terminal P₂₃ of the second transceiver 301. Here, since the NPN transistor TR₄₂ of the fourth control switching portion CS4 is turned off, the fourth light emitting portion LE4 can operate normally.

Similarly, if a logic low signal is input to the D- data terminal P₂₃ of the second transceiver 301, the NPN transistor TR₄₁ of the fourth light emitting portion LE4 is turned off to prevent current from flowing through the light emitting element LD4. In this case, since light is not generated by the light emitting element LD4, a voltage is not generated by the light receiving element PD3 of the third light receiving portion PR3. Furthermore, the NPN transistor TR₃₃ of the third light receiving portion PR3 is turned off to bring the D- data terminal P₁₃ of the first transceiver 301 into a floating state. That is, a logic low D- signal is output through the D- data terminal P₁₃ of the first transceiver 101. Here, the NPN transistor TR₃₂ of the third control switching portion CS3 is turned off, so that the third light emitting portion LE3 cannot operate normally.

### Industrial Applicability

As described above, the USB connecting apparatus according to the present invention provides for an optical communication by the D+ and D-optical communication modules, thereby increasing communication speed and effective communication distance, removing electrical noise, and minimizing the difference in impedances between D+ and D-communication lines.

While this invention has been particularly shown and described with references to preferred embodiments thereof, it will be understood by those skilled in the art that various changes in form and details may be made therein.

## Claims

1. A Universal Serial Bus (USB) connecting apparatus for interconnecting first and second transceivers for USB, the apparatus comprising:
a D+ optical communication module connected between D+ data terminals of the transceivers for converting a D+ electrical signal from the D+ data terminal of the first or second transceiver into a D+ optical signal and transmitting the D+ optical signal, and restoring the transmitted D+ optical signal to a D+ electrical signal and inputting the D+ electrical signal to the D+ data terminal of the second or first transceiver;
a D- optical communication module connected between D- data terminals of the transceivers for converting a D- electrical signal from the D- data terminal of the first or second transceiver into a D- optical signal and transmitting the D- optical signal, and restoring the transmitted D-optical signal to a D- electrical signal and inputting the D- electrical signal to the D- data terminal of the second or first transceiver;
a first electrical line connected between power-voltage terminals of the transceivers; and
a second electrical line connected between ground terminals of the transceivers.

2. The apparatus of claim 1, wherein the D+ optical communication module comprises:
a first light emitting portion that converts a D+electrical signal from the D+ data terminal of the first transceiver into a D+ optical signal;
a first optical fiber line that transmits the D+ optical signal from the first light emitting portion to the second transceiver;
a second light receiving portion that restores the D+ optical signal from the first optical fiber line to a D+ electrical signal and inputs the restored D+ electrical signal to the D+ data terminal of the second transceiver;
a second light emitting portion that converts a D+ electrical signal from the D+ data terminal of the second transceiver into a D+ optical signal;
a second optical fiber line that transmits the D+ optical signal from the second light emitting portion to the first transceiver; and
a first light receiving portion that restores the D+ optical signal from the second optical fiber line to a D+ electrical signal and inputs the restored D+ electrical signal to the D+ terminal of the first transceiver.

3. The apparatus of claim 2, wherein in the D+ optical communication module, light is transmitted through the first or second optical fiber line only when the D+ electrical signal from the D+ data terminal of the first or second transceiver is in a logic low state.

4. The apparatus of claim 3, wherein the D+ optical communication module further comprises:
a first control switching portion that prevents the first light emitting portion from operating only when light is transmitted through the second optical fiber line, and
a second control switching portion that prevents the second light emitting portion from operating only when light is transmitted through the first optical fiber line.

5. The apparatus of claim 1, wherein the D- optical communication module comprises:
a third light emitting portion that converts a D- electrical signal from the D- data terminal of the first transceiver into a D- optical signal;
a third optical fiber line that transmits the D- optical signal from the third light emitting portion to the second transceiver;
a fourth light receiving portion that restores the D- optical signal from the third optical fiber line to a D- electrical signal and inputs the restored D-electrical signal to the D- data terminal of the second transceiver;
a fourth light emitting portion that converts a D- electrical signal from the D- data terminal of the second transceiver into a D- optical signal;
a fourth optical fiber line that transmits the D- optical signal from the fourth light emitting portion to the first transceiver; and
a third light receiving portion that restores the D- optical signal from the fourth optical fiber line to a D- electrical signal and inputs the restored D- electrical signal to the D- terminal of the first transceiver.

6. The apparatus of claim 5, wherein in the D- optical communication module, light is transmitted through the first or second optical fiber line only when the D- electrical signal from the D- data terminal of the first or second transceiver is in a logic high state.

7. The apparatus of claim 6, wherein the D+ optical communication module further comprises:
a third control switching portion that prevents the third light emitting portion from operating only when light is transmitted through the fourth optical fiber line, and
a fourth control switching portion that prevents the third light emitting portion from operating only when light is transmitted through the third optical fiber line.

## Patentansprüche

1. Anschlussapparat für einen Universal Serial Bus (USB) zur Verbindung erster und zweiter Sende-Empfangsgeräte für USB, wobei der Apparat Folgendes umfasst:
Ein D+ optisches Kommunikationsmodul, das zwischen D+ Datenanschlüssen der Sende-Empfangsgeräte angeschlossen ist zum Konvertieren eines D+ elektrischen Signals vom D+ Datenanschluss des ersten oder zweiten Sende-Empfangsgeräts in ein D+ optisches Signal und Übertragen des D+ optischen Signals, und zum Wiederherstellen des übertragenen D+ optischen Signals als D+ elektrisches Signal und Eingeben des D+ elektrischen Signals in den D+ Datenanschluss des zweiten oder ersten Sende-Empfangsgeräts;
ein D- optisches Kommunikationsmodul, das zwischen D-Datenanschlüssen der Sende-Empfangsgeräte angeschlossen ist zum Konvertieren eines D- elektrischen Signals vom D- Datenanschluss des ersten oder zweiten Sende-Empfangsgeräts in ein D- optisches Signal und Übertragen des D- optischen Signals, und zum Wiederherstellen des übertragenen D-optischen Signals als D- elektrisches Signal und Eingeben des D-elektrischen Signals in den D- Datenanschluss des zweiten oder ersten Sende-Empfangsgeräts;
eine erste elektrische Leitung, die zwischen Leistungs-Spannungs-Anschlüssen der Sende-Empfangsgeräte angeschlossen ist; und
eine zweite elektrische Leitung, die zwischen Erdanschlüssen der Sende-Empfangsgeräte angeschlossen ist.

2. Apparat nach Anspruch 1, wobei das D+ optische Kommunikationsmodul Folgendes umfasst:
Einen ersten lichtabgebenden Abschnitt, der ein D+ elektrisches Signal vom D+ Datenanschluss des ersten Sende-Empfangsgeräts in ein D+ optisches Signal konvertiert;
einen ersten Glasfaserleiter, der das D+ optische Signal vom ersten lichtabgebenden Abschnitt zum zweiten Sende-Empfangsgerät überträgt;
einen zweiten lichtempfangenden Abschnitt, der das D+ optische Signal vom ersten Glasfaserleiter als D+ elektrisches Signal wiederherstellt und das wiederhergestellte D+ elektrische Signal in den D+ Datenschluss des zweiten Sende-Empfangsgeräts eingibt;
einen zweiten lichtabgebenden Abschnitt, der ein D+ elektrisches Signal vom D+ Datenanschluss des zweiten Sende-Empfangsgeräts in ein D+ optisches Signal konvertiert;
einen zweiten Glasfaserleiter, der das D+ optische Signal vom zweiten lichtabgebenden Abschnitt zum ersten Sende-Empfangsgerät überträgt; und
einen ersten lichtempfangenden Abschnitt, der das D+ optische Signal vom zweiten Glasfaserleiter als D+ elektrisches Signal wiederherstellt und das wiederhergestellte D+ elektrische Signal in den D+ Anschluss des ersten Sende-Empfangsgeräts eingibt.

3. Apparat nach Anspruch 2, wobei im D+ optischen Kommunikationsmodul nur dann Licht durch den ersten oder zweiten Glasfaserleiter geleitet wird, wenn das D+ elektrische Signal vom D+ Datenanschluss des ersten oder zweiten Sende-Empfangsgeräts in einem logischen Niedrig-Zustand ist.

4. Apparat nach Anspruch 3, wobei das D+ optische Kommunikationsmodul des weiteren Folgendes umfasst:
Einen ersten Steuerschaltabschnitt, der den ersten lichtabgebenden Abschnitt nur dann am Funktionieren hindert, wenn Licht durch den zweiten Glasfaserleiter übertragen wird, und
einen zweiten Steuerschaltabschnitt, der den zweiten lichtabgebenden Abschnitt nur dann am Funktionieren hindert, wenn Licht durch den ersten Glasfaserleiter übertragen wird.

5. Apparat nach Anspruch 1, wobei das D- optische Kommunikationsmodul Folgendes umfasst:
Einen dritten lichtabgebenden Abschnitt, der ein D- elektrisches Signal vom D- Datenanschluss des ersten Sende-Empfangsgeräts in ein D-optisches Signal konvertiert;
einen dritten Glasfaserleiter, der das D- optische Signal vom dritten lichtabgebenden Abschnitt zum zweiten Sende-Empfangsgerät überträgt;
einen vierten lichtempfangenden Abschnitt, der das D- optische Signal vom dritten Glasfaserleiter als D- elektrisches Signal wiederherstellt und das wiederhergestellte D- elektrische Signal in den D- Datenschluss des zweiten Sende-Empfangsgeräts eingibt;
einen vierten lichtabgebenden Abschnitt, der ein D- elektrisches Signal vom D- Datenanschluss des zweiten Sende-Empfangsgeräts in ein D-optisches Signal konvertiert;
einen vierten Glasfaserleiter, der das D- optische Signal vom vierten lichtabgebenden Abschnitt zum ersten Sende-Empfangsgerät überträgt; und
einen dritten lichtempfangenden Abschnitt, der das D- optische Signal vom vierten Glasfaserleiter als D- elektrisches Signal wiederherstellt und das wiederhergestellte D- elektrische Signal in den D- Anschluss des ersten Sende-Empfangsgeräts eingibt.

6. Apparat nach Anspruch 5, wobei im D- optischen Kommunikationsmodul nur dann Licht durch den ersten oder zweiten Glasfaserleiter geleitet wird, wenn das D- elektrische Signal vom D-Datenanschluss des ersten oder zweiten Sende-Empfangsgeräts in einem logischen Hoch-Zustand ist.

7. Apparat nach Anspruch 6, wobei das D+ optische Kommunikationsmodul des weiteren Folgendes umfasst:
Einen dritten Steuerschaltabschnitt, der den dritten lichtabgebenden Abschnitt nur dann am Funktionieren hindert, wenn Licht durch den vierten Glasfaserleiter übertragen wird, und
einen zweiten Steuerschaltabschnitt, der den dritten lichtabgebenden Abschnitt nur dann am Funktionieren hindert, wenn Licht durch den dritten Glasfaserleiter übertragen wird.

## Revendications

1. Appareil de connexion à Bus Série Universel (USB) pour interconnecter des premier et second émetteurs-récepteurs pour USB, l'appareil comprenant :
un module de communication optique D+ connecté entre des bornes de données D+ des émetteurs-récepteurs pour convertir un signal électrique D+ provenant de la borne de données D+ du premier ou du second émetteur-récepteur en un signal optique D+ et transmettre le signal optique D+, et restaurer le signal optique D+ transmis en un signal électrique D+ et entrer le signal électrique D+ dans la borne de données D+ du second ou premier émetteur-récepteur ;
un module de communication optique D- connecté entre des bornes de données D- des émetteurs-récepteurs pour convertir un signal électrique D- provenant de la borne de données D- du premier ou du second émetteur-récepteur en un signal optique D- et transmettre le signal optique D-, et restaurer le signal optique D-transmis en un signal électrique D- et entrer le signal électrique D- dans la borne de données D- du second ou premier émetteur-récepteur ;
une première ligne électrique connectée entre des bornes de puissance-tension des émetteurs-récepteurs ; et
une deuxième ligne électrique connectée entre des bornes de masse des émetteurs-récepteurs.

2. Appareil selon la revendication 1, dans lequel le module de communication optique D+ comprend :
une première partie émettrice de lumière qui convertit un signal électrique D+ provenant de la borne de données D+ du premier émetteur-récepteur en un signal optique D+ ;
une première ligne de fibre optique qui transmet le signal optique D+ provenant de la première partie émettrice de lumière au second émetteur-récepteur ;
une deuxième partie réceptrice de lumière qui restaure le signal optique D+ provenant de la première ligne de fibre optique en un signal électrique D+ et entre le signal électrique D+ restauré dans la borne de données D+ du second émetteur-récepteur ;
une deuxième partie émettrice de lumière qui convertit un signal électrique D+ provenant de la borne de données D+ du second émetteur-récepteur en un signal optique D+ ;
une deuxième ligne de fibre optique qui transmet le signal optique D+ provenant de la deuxième partie émettrice de lumière au premier émetteur-récepteur ; et
une première partie réceptrice de lumière qui restaure le signal optique D+ provenant de la deuxième ligne de fibre optique en un signal électrique D+ et entre le signal électrique D+ restauré dans la borne D+ du premier émetteur-récepteur.

3. Appareil selon la revendication 2, dans lequel dans le module de communication optique D+, la lumière est transmise par le biais de la première ou de la deuxième ligne de fibre optique uniquement quand le signal électrique D+ provenant de la borne de données D+ du premier ou du second émetteur-récepteur a un état logique bas.

4. Appareil selon la revendication 3, dans lequel le module de communication optique D+ comprend en outre :
une première partie de commutation de commande qui empêche la première partie émettrice de lumière de fonctionner uniquement quand la lumière est transmise par le biais de la deuxième ligne de fibre optique, et
une deuxième partie de commutation de commande qui empêche la deuxième partie émettrice de lumière de fonctionner uniquement quand la lumière est transmise par le biais de la première ligne de fibre optique.

5. Appareil selon la revendication 1, dans lequel le module de communication optique D- comprend :
une troisième partie émettrice de lumière qui convertit un signal électrique D- provenant de la borne de données D- du premier émetteur-récepteur en un signal optique D- ;
une troisième ligne de fibre optique qui transmet le signal optique D- provenant de la troisième partie émettrice de lumière au second émetteur-récepteur ;
une quatrième partie réceptrice de lumière qui restaure le signal optique D- provenant de la troisième ligne de fibre optique en un signal électrique D- et entre le signal électrique D- restauré dans la borne de données D- du second émetteur-récepteur ;
une quatrième partie émettrice de lumière qui convertit un signal électrique D- provenant de la borne de données D- du second émetteur-récepteur en un signal optique D- ;
une quatrième ligne de fibre optique qui transmet le signal optique D- provenant de la quatrième partie émettrice de lumière au premier émetteur-récepteur ; et
une troisième partie réceptrice de lumière qui restaure le signal optique D- provenant de la quatrième ligne de fibre optique en un signal électrique D- et entre le signal électrique D- restauré dans la borne D-du premier émetteur-récepteur.

6. Appareil selon la revendication 5, dans lequel dans le module de communication optique D-, la lumière est transmise par le biais de la première ou de la deuxième ligne de fibre optique uniquement quand le signal électrique D- provenant de la borne de données D- du premier ou du second émetteur-récepteur a un état logique haut.

7. Appareil selon la revendication 6, dans lequel le module de communication optique D+ comprend en outre :
une troisième partie de commutation de commande qui empêche la troisième partie émettrice de lumière de fonctionner uniquement quand la lumière est transmise par le biais de la quatrième ligne de fibre optique, et
une quatrième partie de commutation de commande qui empêche la troisième partie émettrice de lumière de fonctionner uniquement quand la lumière est transmise par le biais de la troisième ligne de fibre optique.
